# FASCICULE DE BREVET EUROPEEN

(11) **EP 0 497 687 B1**
(45) Date de publication et mention de la délivrance du brevet: **05.10.1994**
(21) Numéro de dépôt: 92400220.7
(22) Date de dépôt: 29.01.1992
(51) Int. Cl.: F17C 1/06, F17C 1/16, B21D 51/24, B29C 53/60

(54) **Procédé de fabrication d'une structure légère par expansion d'un réservoir métallique dans un tube ondulé armé**
Verfahren zur Herstellung einer Leichtbaustruktur durch Expansion von einem Metallbehälter innen in einem verstärkten, wellenförmig profilierten Rohr
Method of producing a light-weight structure by expansion of a metallic reservoir inside a reinforced corrugated tube

(30) Priorité: 01.02.1991 FR 9101193
(43) Date de publication de la demande: 05.08.1992
(73) Titulaire: INSTITUT FRANCAIS DU PETROLE, 92506 Rueil-Malmaison Cédex (FR)
(72) Inventeur: Huvey, Michel, F-78380 Bougival (FR)

(56) Documents cités:
- EP-A- 0 333 013
- FR-A- 2 340 814
- FR-E- 94 391
- GB-A- 1 161 846

## Description

La présente invention concerne un procédé de fabrication d'un réservoir métallique résistant, capable de supporter des pressions élevées et présentant un poids unitaire faible.

Le procédé décrit dans la présente invention permet de fabriquer une structure légère avec un faible prix de revient et une réalisation rapide, et autorise une adaptation aisée des structures ou auto-adaptation.

Ce procédé est appliqué à un réservoir dont la gaine interne est constituée par un tube métallique.

La demande de brevet FR-90/14.490 décrit un procédé de fabrication d'un réservoir métallique agencé de façon à concilier une relative légèreté tout en conservant une résistance à la pression identique ou supérieure à la résistance des réservoirs conventionnels.

La fabrication de tels tubes nécessite l'utilisation de moule très lourd et donc des investissements importants, un moule étant adapté spécifiquement à une structure donnée, et la durée de fabrication, en outre, est relativement longue.

Une autre façon de procéder consiste à utiliser des bandes métalliques et à les enrouler hélicoïdalement de façon à obtenir une zone cylindrique ondulée. Cette opération présente l'inconvénient d'être très lente.

Le procédé décrit selon la présente invention évite une grande partie de ces écueils.

L'idée esssentielle qui est développée dans la présente invention est d'utiliser un tube thermoplastique renforcé, décrit précédemment dans le brevet FR-2.553.860, comme moule pour onduler un réservoir métallique, le tube et son moule restant imbriqués l'un dans l'autre après fabrication, le tube métallique étant situé à l'intérieur du moule.

Le produit de départ est donc le tube ondulé de base, accessible avec des formes d'ondes diverses et peu coûteux lorsqu'il s'agit d'un tube thermoplastique, mais extrêmement onéreux lorsqu'il s'agit d'un tube métallique.

Le gain obtenu grâce à l'invention résulte du fait que l'on s'affranchit de l'utilisation de tubes ondulés métalliques préformés par les moyens de fabrication habituels.

En effet, on peut fabriquer des tubes thermoplastiques de longueur choisie, modulables en fonction de la structure demandée plus facilement et de façon moins onéreuse que les moules habituellement utilisés pour former les réservoirs métalliques et moins souples au niveau du réglage.

Le procédé décrit par la suite, offre de plus l'avantage de permettre une auto-adaptation des formes du réservoir à son utilisation future, lui conférant ainsi un maximum de résistance.

La structure ainsi constituée selon notre invention, présente l'avantage d'offrir un poids unitaire compris entre la moitié et le sixième de celui des récipients conventionnels en acier tout en préservant une résistance à la pression identique à celle des bouteilles de technologie classique.

Le procédé de fabrication du réservoir selon la présente invention comprend en combinaison les étapes suivantes :
a) on réalise un tube ondulé, tel un tube en thermoplastique, sensiblement cylindrique de longueur adaptée à la structure finale,
b) on renforce circonférentiellement ledit tube en garnissant sur au moins une partie de leur hauteur H les portions externes creuses dudit tube ondulé sensiblement cylindrique d'un élément de renfort circonférentiel,
c) on place à l'intérieur du tube ainsi armé ou renforcé un réservoir métallique cylindro-hémisphérique ou cylindro-ellipsoïdal pourvu d'une zone cylindrique qui correspond en longueur et diamètre à la longueur dudit tube ondulé armé,
d) on dépose sur l'extérieur de l'ensemble constitué du tube armé et du réservoir métallique, à l'exception des ouvertures, un moyen de résistance à la traction longitudinale ou renfort longitudinal,
e) on fait fluer par déformation plastique sous l'effet d'une pression interne le matériau du réservoir métallique de façon à ce qu'il prenne une forme lui permettant de résister à la pression en prenant appui sur le renfort circonférentiel du tube ondulé et le renfort longitudinal déposé lors de l'étape d).

La réalisation de l'étape b) peut être effectuée lors de la fabrication du réservoir, ou de façon indépendante, sur un tube thermoplastique continu, que l'on découpe ensuite à la longueur correspondant à la zone cylindrique du réservoir à créer.

Selon des modalités préférées de réalisation, dont certaines peuvent être réalisées simultanément :
- le réservoir métallique employé est en métal à haut allongement plastique. On peut utiliser, par exemple, de l'acier inox, de l'acier ordinaire ou un alliage léger,
- l'élément de renfort circonférentiel peut être une résine stabilisable renforcée de fibres, dans ce cas, on soumet le tube ainsi armé sur au moins une partie de sa longueur à un traitement permettant la stabilisation de la composition stabilisable,
- la résine est par exemple une résine photoréticulable et l'étape de stabilisation est réalisée en exposant ledit ensemble à l'action d'une lampe génératrice de rayonnement ultra-violet.

La résine est, par exemple, une résine thermoréticulable et l'ensemble est maintenu à l'étape de stabilisation dans des conditions permettant à la réticulation de se produire.

La résine est, par exemple, une résine thermodurcissable et la stabilisation est réalisée par chauffage dudit ensemble jusqu'à une température permettant le durcissement de la résine.

Les moyens de résistance à la traction longitudinale ou renfort longitudinal de la zone cylindrique, qui assurent également le soutien des fonds, sont constitués de fibres déposées sur la structure externe du réservoir par bobinage hélicoïdal ou polaire, et/ou d'une tresse mise en place sur la structure externe du réservoir.

Le renfort longitudinal est, par exemple, constitué d'une mèche d'aramide imprégnée d'élastomère thermoplastique, les extrémités de la mèche étant fixées par collage aux extrémités du réservoir.

Après l'étape b), on peut déposer, par exemple, une gaine de matériau substantiellement non perméable à ladite résine, de manière à maintenir celle-ci sensiblement en place dans lesdites portions externes creuses du tube ondulé, avant de procéder à l'étape d). De cette façon, le traitement de stabilisation peut être effectué après l'étape de bobinage et avant l'étape de mise en forme ou fluage du métal. La gaine déposée éventuellement peut être un simple enroulement hélicoïdal d'une bande de matériau plastique ou élastomérique dont l'épaisseur peut être faible, puisque cette bande, après durcissement de la résine n'a normalement plus de rôle à jouer.

Au moins une extrémité du réservoir est pourvue d'un système permettant la communication avec l'extérieur ou la fermeture étanche.

On peut éventuellement garnir extérieurement le réservoir ainsi obtenu d'une couche protectrice, par exemple en projetant une solution d'un élastomère thermoplastique après l'étape au cours de laquelle on dépose le renfort longitudinal.

Afin de renforcer la protection du réservoir, on peut placer ce dernier dans une enveloppe protectrice constituée, par exemple, par un conteneur en carton ondulé, l'espace entre la boîte et le réservoir étant rempli d'une composition expansible à base de résine phénolique.

Le réservoir ainsi obtenu par le procédé de fabrication décrit précédemment est composé d'une gaine interne métallique constituée de deux fonds séparés par un corps ou zone cylindrique ondulée et assemblés audit corps cylindrique, lesdits fonds étant munis d'au moins une ouverture et de moyens de fermeture ou de communication avec l'extérieur (lesdits moyens pouvant être des vannes ou un bouchon et une vanne), et des moyens de résistance à la traction longitudinale. Il est caractérisé en ce que la gaine interne métallique de la zone cylindrique comporte des ondulations, les ondes de ladite zone cylindrique ayant, de préférence, une forme circonférentielle.

Le réservoir peut être utilisé notamment pour le stockage de fluide sous pression.

Le renfort longitudinal peut être constitué de fibres mises en place de façon à ce que les fibres passent autour des pôles de la bouteille, ou bobinage polaire, ou d'une tresse mise en place sur la structure externe du réservoir.

L'invention sera mieux comprise et d'autres buts, caractéristiques, détails et avantages de celle-ci apparaîtront plus clairement au cours de la description explicative qui va suivre, faite en référence aux dessins schématiques annexés donnés uniquement à titre d'exemple, illustrant différents modes de réalisation de l'invention et dans lesquels :
- La figure 1 décrit un moule à paroi ondulée renforcée qui va servir à la mise en forme du réservoir métallique.
- La figure 2 représente une portion de la zone cylindrique ondulée du moule représenté à la figure 1,
- La figure 3 montre la disposition des éléments au cours du processus de fabrication,
- La figure 4 montre une vue partielle de la paroi du réservoir métallique après mise en forme, et
- la figure 5 montre une structure légère ou réservoir telle qu'obtenu selon l'invention.

La mise en oeuvre du procédé comporte l'utilisation d'un moule renforcé obtenu en mettant en oeuvre la méthode d'armage circonférentiel décrite dans la demande de brevet 90/14.490.

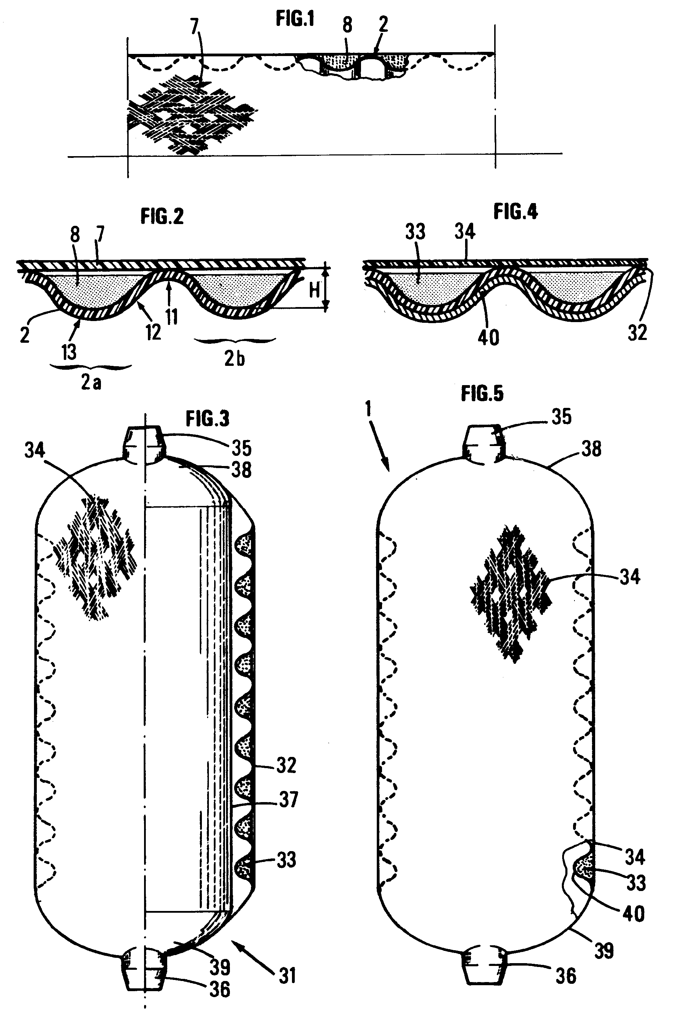

La figure 1 montre un tube ondulé cylindrique armé 2 qui va servir de moule pour la mise en forme du réservoir métallique. Ledit tube est constitué en matériau thermoplastique. La surface externe dudit tube doit avoir une forme qui permet d'obtenir l'ondulation souhaitée finale.

On peut utiliser, par exemple, un tube ondulé en polypropylène.

Le renfort longitudinal 7 est mis en place, comme nous le verrons dans la suite de la description du procédé, après assemblage du réservoir métallique à former dans le moule.

Plus précisément, la figure 2 montre la portion dudit tube cylindrique ondulé armé constituant le moule. La méthode permettant d'obtenir une telle structure est décrite dans la demande de brevet 90/14.490. Elle comprend une opération d'armage circonférentiel qui consiste à remplir les portions creuses 2a, 2b du tube ondulé à l'aide de résine armée de fibres 8, suivie d'une étape de traitement de stabilisation de la composition comprenant des fibres de renforcement.

Les caractéristiques données par la suite sont un rappel, ces dernières ayant été vues dans la demande de brevet FR-90/14.490.

La section axiale du tube ondulé est constituée de portions de cercle successives 11, 13, ces portions de cercle peuvent être séparées ou non par des portions 12 sensiblement rectilignes vues en coupe, et correspondant à des zones sensiblement coniques en représentation spatiale.

Les formes constituées par les portions creuses et en relief successives peuvent constituer des anneaux successifs ou adopter une forme hélicoïdale.

On ne sortira pas de la présente invention si l'on utilise une structure de type "accordéon". Dans ce cas, la portion creuse pourra être garnie sur sensiblement toute sa hauteur. De la même façon, l'ondulation pourra être sinusoïdale ou approchante.

Dans la suite de la description, on appelle armage circonférentiel, l'opération qui permet de déposer l'élément de renfort circonférentiel dans le creux externe des ondulations du tube et armage longitudinal, l'opération par laquelle on dépose les moyens de résistance à la traction longitudinale.

La figure 3 montre l'agencement des différents éléments utilisés pour obtenir la structure creuse dont la gaine interne est en métal par la méthode exposée dans la suite de ce brevet.

Selon le procédé de l'invention, on utilise deux structures indépendantes : une structure métallique 31, ou réservoir, et une structure constituée d'un morceau de tube ondulé thermoplastique armé 32, tel que le tube 2 de la figure 2 décrit précédemment.
1) Une des possibilités d'obtenir la structure métallique ou réservoir 31, est d'associer un tube mince métallique lisse 37 et deux fonds hémisphériques 38, 39 de même épaisseur.
   Les fonds 38 et 39 ont une forme ellipsoïdale ou hémisphérique.
   La gaine étanche des fonds 38, 39 pourra être avantageusement de la même nature que celle du tube métallique 37 constituant la zone cylindrique du réservoir, bien qu'elle puisse être d'une nature différente. L'utilisation de produits de même nature pour la gaine des fonds et celle du tube métallique permet une soudure étanche qui présente des qualités mécaniques équivalentes à celles de la longueur courante.
   Les fonds 38, 39 peuvent être réalisés par estampage, thermoformage, injection, ou tout autre procédé habituel.
   On équipe ensuite les zones extrêmes du réservoir avec une vanne 35 et un bouchon 36 tels que ceux normalisés pour le stockage des gaz liquéfiés ou des gaz comprimés.
   Les extrémités du réservoir peuvent aussi être équipées avec deux vannes. On peut aussi avoir une vanne à une extrémité, l'autre étant totalement lisse.
   On utilise un réservoir métallique cylindrique dont le diamètre externe est de préférence très légèrement inférieur au diamètre interne du tube ondulé armé.
2) On utilise comme moule la structure 32 précédemment décrite. Elle est constituée, par exemple, d'un morceau de tube ondulé 32 thermoplastique armé.
3) On assemble ensuite le réservoir métallique 31 et le tube ondulé armé 32, le tube ondulé armé 32 entoure le réservoir métallique 31 sur la plus grande partie de la longueur de sa partie cylindrique.
   On peut éventuellement effectuer le traitement de stabilisation de la résine servant à lier les fibres, l'ensemble constituant le renfort circonférentiel du tube thermoplastique, après l'assemblage des deux structures.
4) On dote l'ensemble formé par le réservoir et le tube ondulé armé d'une résistance à la composante longitudinale de la pression interne, en armant longitudinalement ledit ensemble, en déposant un renfort longitudinal (34) sur l'extérieur dudit ensemble, à l'exception des ouvertures.
   L'opération d'armage longitudinal s'effectue de la façon-suivante.
   On positionne l'ensemble du réservoir et du tube ondulé armé sur une machine d'enroulement, au moyen de laquelle on dépose le renfort longitudinal 34.
   Le renfort longitudinal 34 peut être constitué de fibres déposées sur la structure par bobinage polaire ou par une tresse mise en place sur l'ensemble du réservoir.
   Un des rôles du renfort longitudinal est de permettre à la structure de résister à la traction longitudinale lors de la mise sous pression du réservoir métallique au cours de l'opération de mise en forme.
   Ledit renfort longitudinal peut être une couche de polyaramide (Kevlar ou Twaron) préimprégné d'un élastomère thermoplastique du type Styrène-Isopropène-Styrène partiellement hydrogéné de 0.2mm d'épaisseur.
   Les mèches ainsi déposées sont collées aux extrémités du réservoir par ajout de quelques gouttes d'un solvant de l'élastomère, le solvant peut être du trichloéthylène.
   Tout autre moyen assurant un arrêt fiable des mèches peut être utilisé.
5) L'ensemble réservoir et tube ondulé armé emboités et armés longitudinalement étant constitué, on procède à l'opération de mise en forme ou fluage de la gaine interne métallique. Pour ce faire, on raccorde l'une des vannes du réservoir à des moyens de mise en pression.

Ces moyens peuvent être, par exemple, une source d'eau sous pression dont on fait progressivement monter la pression.

Le comportement du matériau constituant la gaine métallique ou structure métallique lors de l'opération de formage est décrit par l'exemple chiffré suivant.

Au cours de cette opération, l'alimentation en fluide se fait sous pression à débit constant. On observe tout d'abord une montée rapide en pression jusqu'à la limite élastique du métal.

Dans le cas d'un réservoir constitué d'une tôle d'acier de 1 mm d'épaisseur et de 240 mm de diamètre, de résistance élastique 5000 Bars et de résistance à la rupture 6000 Bars, la limite élastique se trouve atteinte lorsque la pression se situe aux alentours de 40 bars.

Au-delà de la valeur de la limite élastique, la pression monte lentement et la tôle d'acier se déforme simultanément pour adopter une forme du tube ondulé, sur toute la longueur de la partie cylindrique. La tôle d'acier vient alors s'appliquer ou se plaquer contre le renfort longitudinal au niveau des fonds.

La zone de raccordement, à savoir la zone située entre les fonds hémisphériques et la partie cylindrique du réservoir, adopte la forme mécaniquement la plus stable par auto-adaptation.

Pendant le processus de formage (P> 40 bars) et jusqu'à la fin de ce processus, la tôle s'affine de façon considérable. La fin du processus de formage se situe pour une valeur de pression de l'ordre de 600 bars.

L'épaisseur de la tôle d'acier formée est proche de 1 mm dans la zone des fonds, et de 0,4 mm dans la zone cylindrique où l'acier a épousé étroitement la forme du renfort circonférentiel.

La structure 32 ou tube thermoplastique ondulé ayant servi de moule de départ flue en servant de lubrifiant pendant la phase de formage. Elle est coincée entre le métal en expansion et le renfort composite.

Le réservoir obtenu par ce procédé est caractérisé par :
- une pression d'éclatement de 900 bars
- une pression interne d'utilisation courante de 300 bars

ce qui correspond à une pression d'éclatement 18 fois plus élevée que la pression d'éclatement du produit de départ, à savoir le réservoir métallique.

On obtient ainsi un réservoir dont la masse est de 21 kgs, ce qui correspond environ au tiers de la masse d'un réservoir conventionnel (60 kgs) pour une même capacité et ceci tout en conservant la même tenue à la pression d'éclatement. La pression d'écrasement de ce réservoir est supérieure à 0,6 MPa.

La figure 4 montre de façon plus précise une partie de la paroi du réservoir métallique obtenue après mise en forme par le procédé précédemment décrit.

Le tube métallique lisse 37 dans sa partie cylindrique a pris une forme ondulée 40, le tube thermoplastique 32 ondulé ayant servi de moule est coincé entre le tube métallique ondulé et les renforts circonférentiels 33.

Au cours de l'opération de fluage, le tube thermoplastique a flué. Son épaisseur n'est donc plus forcément homogène sur toute sa longueur, il peut aussi présenter des zones pour lesquelles il a pratiquement disparu. Ceci n'a pas d'importance puisqu'il ne joue plus aucun rôle.

La référence 34 indique le renfort longitudinal déposé sur l'ensemble du réservoir obtenu par le procédé de fabrication décrit dans ce brevet.

La figure 5 montre une structure légère ou réservoir 1 obtenue par le procédé de fabrication précédemment décrit. Il est constitué d'une gaine métallique ondulée 40, de deux fonds 38, 39 situés aux extrémités de la zone cylindrique, lesdits fonds étant équipés de deux vannes 35, 36 situées aux extrémités du réservoir et des moyens de résistance à la traction longitudinale 34 ou renfort longitudinal. La référence 33 désigne le renfort circonférentiel.

Le renfort longitudinal a pour but de reprendre l'effet de fonds de la partie cylindrique ou tubulaire du réservoir. La présence dudit renfort sur les fonds permet de diminuer l'épaisseur des fonds et ainsi d'alléger la structure.

On peut éventuellement ajouter une protection supplémentaire en plaçant le réservoir ainsi constitué dans un conteneur, par exemple de carton ondulé, et garnir l'espace entre le conteneur et le réservoir d'une mousse qui présente un bon comportement en cas d'incendie, par exemple, une composition expansible à base de résine phénolique ou tout autre matériau remplissant la même fonction.

L'ensemble conteneur et matériau constitue une enveloppe protectrice aux chocs et à l'échauffement de l'ensemble.

De plus, cet agencement facilite le transport et le stockage du réservoir.

On ne sortira pas de la présente invention si l'on utilise des compositions stabilisables déjà décrites dans la demande précédente FR 90/14.490. On peut employer, par exemple, une composition stabilisable chargée de fibres, un préimprégné thermodurcissable fibres de verre-résine époxy dans la proportion volumique 50%/50% ou un ruban de fibres de verres imprégné de polyamide 12 de 2 mm de largeur et de 0,35 mm d'épaisseur. Dans ce cas on procédera pour chacun au traitement adapté qui permet la stabilisation de la résine.

L'invention n'est pas limitée à l'emploi d'une résine thermodurcissable particulière. On pourra par exemple mélanger une résine avec son durcisseur pour imprégner les filaments qui serviront à garnir les portions externes creuses du tube ondulé, et chauffer ensuite. On peut aussi réaliser une vulcanisation en garnissant les ondes de filaments préalablement imprégnés de latex additionné de soufre.

On peut aussi utiliser une résine formo-phénolique, une résine mélamine-formaldéhyde, une résine urée-formaldéhyde, une résine époxyde, une résine polyester ou vinylester, ou une résine alkyde, ou mettre en place dans les portions creuses du tube ondulé des mèches constituées d'un mélange de fibres renforçantes et de fibres thermoplastiques fusibles ou des fibres renforçantes garnies de poudre de résine thermoplastique fusible, puis, après enroulement, procéder à un traitement thermique permettant d'obtenir la fusion du thermoplastique avant de procéder au refroidissement assurant le durcissement de l'ensemble.

Il est également possible de réchauffer la mèche comportant des fibres de renfort et la résine fusible, par exemple au moyen d'un chalumeau juste avant le point de pose de façon à fondre la résine juste avant de déposer la mèche imprégnée. Le traitement thermique ultérieur devient alors inutile. Le fait que le renforcement circonférenciel soit discontinu dans le sens axial du réservoir, et qu'il ne soit pas lié au renfort longitudinal, évite les phénomènes de micro fissuration.

L'utilisation de composites à matrice thermoplastique, dans tous les procédés décrits précédemment, peut présenter l'avantage de supprimer l'opération de stabilisation complémentaire après le bobinage, cette stabilisation pouvant être réalisée par refroidissement durant le bobinage lui-même.

On ne sortirait pas du cadre de l'invention en utilisant tout tube ondulé présentant des caractéristiques qui permettent de mettre en oeuvre le procédé.

## Revendications

1. Procédé de fabrication d'un réservoir métallique, caractérisé en ce que :
a) on réalise un tube ondulé, tel un tube en thermoplastique, sensiblement cylindrique de longueur adaptée à la structure finale,
b) on renforce circonférentiellement ledit tube en garnissant sur au moins une partie de leur hauteur H, les portions externes creuses dudit tube ondulé sensiblement cylindrique, d'un élément de renfort circonférentiel,
c) on place à l'intérieur du tube ainsi armé un réservoir métallique cylindro-hémisphérique ou cylindro-ellipsoïdal pourvu d'une zone cylindrique qui correspond en longueur et diamètre à la longueur dudit tube ondulé armé,
d) on dépose sur l'extérieur de l'ensemble constitué par le tube armé et le réservoir métallique, à l'exception des ouvertures un renfort longitudinal,
e) on fait fluer par déformation plastique sous l'effet d'une pression interne le matériau du réservoir de façon à ce qu'il prenne une forme lui permettant de résister à la pression en prenant appui sur le renfort circonférentiel du tube ondulé et le renfort longitudinal déposé lors de l'étape d).

2. Procédé selon la revendication 1, caractérisé en ce que l'on utilise un métal qui est un acier à haut allongement plastique.

3. Procédé selon la revendication 1, caractérisé en ce que l'on utilise un élément de renfort circonférentiel, tel une résine stabilisable renforcée de fibres, et on le soumet à un traitement permettant la stabilisation de la composition stabilisable.

4. Procédé selon la revendication 1, caractérisé en ce que l'on emploie une résine photoréticulable que l'on stabilise en exposant ledit ensemble à l'action d'une lampe génératrice de rayonnement ultra-violet.

5. Procédé selon la revendication 1 dans lequel on utilise une résine thermoréticulable et on maintient l'ensemble à l'étape de stabilisation dans des conditions permettant à la réticulation de se produire.

6. Procédé selon la revendication 1 dans lequel on emploie une résine thermodurcissable et on la stabilise par chauffage dudit ensemble jusqu'à une température permettant le durcissement de la résine.

7. Procédé selon l'une des revendications précédentes, caractérisé en ce que le renfort longitudinal est constitué d'une mèche d'aramide imprégné d'élastomère thermoplastique, les extrémités des mèches étant fixées par des points de collage aux pôles du réservoir.

8. Procédé selon la revendication 3, caractérisé en ce que l'on recouvre le tube flexible garni de ladite composition durcissable renforcée de fibres, d'une gaine de matériau substantiellement non perméable à ladite résine, de manière à maintenir celle-ci sensiblement en place dans lesdites portions externes creuses du tube ondulé, avant de procéder à l'armage longitudinal.

9. Procédé selon la revendication 8, caractérisé en ce que l'on effectue le traitement de stabilisation en même temps que le bobinage.

10. Procédé selon l'une des revendications précédentes, dans lequel on équipe au moins une extrémité du réservoir d'un système permettant la communication avec l'extérieur ou la fermeture étanche.

11. Procédé selon l'une des revendications précédentes, dans lequel on place le réservoir dans une enveloppe protectrice.

12. Réservoir réalisé selon le procédé de la revendication 1, composé d'une gaine interne métallique constituée de deux fonds (38, 49) séparés par une zone cylindrique ondulée (40) et assemblés audit corps cylindrique, lesdits fonds étant munis d'au moins une ouverture et de moyens de fermeture ou de communication avec l'extérieur (35, 36) tels un bouchon ou une vanne situés sur lesdits fonds et de moyens de résistance à la traction longitudinale (34), caractérisé en ce que la gaine interne métallique de la zone cylindrique comporte des ondulations, les ondes de ladite zone cylindrique ayant une forme circonférentielle ou hélicoïdale à faible pas, les creux extérieurs (2a, 2b) des ondulations de ladite gaine interne étant garnis d'une composition comprenant des fibres de renforcement et en ce que les moyens de résistance à la traction longitudinale (34) sont placés sur l'ensemble de la structure externe du réservoir à l'exception des ouvertures.

13. Réservoir selon la revendication 12, utilisé pour le stockage de fluides sous pression.

14. Réservoir selon la revendication 12, caractérisé en ce que la composition est une résine époxy ou une résine thermodurcissable ou une résine thermoréticulable.

15. Réservoir selon la revendication 12, caractérisé en ce que les moyens de résistance à la traction longitudinale sont des fibres bobinées de façon polaire ou hélicoïdale à pas long et/ou une tresse mise en place sur la structure externe du réservoir.

## Patentansprüche

1. Verfahren zur Herstellung eines metallischen (Speicher)behälters, dadurch gekennzeichnet, daß:
a) man ein Wellrohr, beispielsweise ein Rohr aus thermoplastischem Material herstellt, das im wesentlichen zylindrisch und von einer auf die Endstruktur angepaßten Länge ist.
b) man dieses Rohr verstärkt, indem man auf wenigstens einem Teil ihrer Höhe H die hohlen Außenteile dieses im wesentlichen zylindrischen Wellrohres mit einem Umfangsverstärkungselement verkleidet,
c) man im Inneren des so armierten Rohres einen zylindro-hemisphärischen oder zylindro-elliptischen metallischen (Speicher)behälter einsetzt, der mit einer zylindrischen Zone versehen ist, die in Länge und Durchmesser der Länge dieses armierten Wellrohres entspricht,
d) man außen auf die durch das armierte Rohr und den metallischen (Speicher)behälter gebildete Anordnung mit Ausnahme der Öffnungen, eine Längsverstärkung abscheidet und
e) man durch plastische Deformation unter dem Einfluß eines Innendruckes das Material des (Speicher)behälters derart fließen läßt, daß es eine Form annimmt, die es ihm erlaubt, beständig gegen Druck zu sein, der sich auf die Umfangsverstärkung des Wellrohrs und die während der Stufe d) abgeschiedene Längsverstärkung abstützt.

2. Verfahren nach Anspruch 1, dadurch gekennzeichnet, daß man ein Metall verwendet, das ein Stahl mit hoher plastischer Längung ist.

3. Verfahren nach Anspruch 1, dadurch gekennzeichnet, daß man ein Element der Umfangsverstärkung, beispielsweise ein faserverstärktes, stabilisierbares Harz verwendet und man es einer Behandlung aussetzt, die die Stabilisierung der stabilisierbaren Zusammensetzung ermöglicht.

4. Verfahren nach Anspruch 1, dadurch gekennzeichnet, daß man ein photovernetzbares Harz verwendet, das man stabilisiert, indem man diese Anordnung der Wirkung einer ultraviolette Strahlung erzeugenden Lampe aussetzt.

5. Verfahren nach Anspruch 1, bei dem man ein wärmevernetzbares Harz verwendet, und man die Anordnung in der Stabilisierungsstufe unter Bedingungen hält, die es ermöglichen, daß die Vernetzung hervorgerufen wird.

6. Verfahren nach Anspruch 1, bei dem man ein in der Wärme härtbares Harz verwendet und man es durch Erwärmen dieser Anordnung bis auf eine Temperatur stabilisiert, welche die Härtung des Harzes ermöglicht.

7. Verfahren nach einem der vorhergehenden Ansprüche, dadurch gekennzeichnet, daß die Längsverstärkung gebildet wird durch ein Aramidspinnband, das mit thermoplastischem Elastomer imprägniert ist, wobei die Enden der Spinnbänder durch Klebstellen an den Polen des (Speicher)behälters fixiert sind.

8. Verfahren nach Anspruch 3, dadurch gekennzeichnet, daß man das mit dieser faserverstärkten Zusammensetzung ausgekleidete flexible Rohr mit einer Hülle aus einem Material überdeckt, das für dieses Harz im wesentlichen nicht permeabel ist, derart, daß dieses im wesentlichen am Ort in diesen äußeren hohlen Teilen des Wellrohrs gehalten ist, bevor die Längsarmierung vorgenommen wird.

9. Verfahren nach Anspruch 8, dadurch gekennzeichnet, daß man die Stabilisierungsbehandlung gleichzeitig mit der Wicklung vornimmt.

10. Verfahren nach einem der vorhergehenden Ansprüche, bei dem man wenigstens ein Ende des Speicherbehälters mit einem System ausstattet, welches die Verbindung nach außen bzw. das Dichteschließen ermöglicht.

11. Verfahren nach einem der vorhergehenden Ansprüche, bei dem man diesen (Speicher)behälter in eine Schutzhülle einbringt.

12. (Speicher)behälter, hergestellt nach dem Verfahren des Anspruchs 1, zusammengesetzt aus einer inneren metallischen Hülle, die aus zwei Böden (38, 49) besteht, die durch eine zylindrische gewellte Zone (40) voneinander getrennt und an diesem zylindrischen Körper montiert sind, wobei die Böden mit wenigstens einer öffnung und mit Schließ- und Verbindungsmitteln mit der äußeren Umgebung (35, 36) wie einem Stopfen oder einem Ventil ausgestattet sind, welche an diesen Böden angebracht sind, sowie mit Mitteln der Beständigkeit gegen Längszug (34) ausgestattet sind, dadurch gekennzeichnet, daß die metallische Innenverkleidung der zylindrischen Zone Wellungen umfaßt, wobei die Wellungen dieser zylindrischen Zone eine Umfangs- oder Spiralform geringer Steigung haben, wobei die äußeren Höhlungen (2a, 2b) der Wellungen dieser Innenhülle mit einer Zusammensetzung verkleidet sind, welche Verstärkungsfasern umfassen und daß diese Mittel für die Zugbeständigkeit in Längsrichtung (34) auf der Gesamtheit der Außenstruktur des (Speicher)behälters mit Ausnahme der öffnungen angeordnet sind.

13. (Speicher)behälter nach Anspruch 12, verwendet für das Speichern von Fluiden unter Druck.

14. (Speicher)behälter nach Anspruch 12, dadurch gekennzeichnet, daß die Zusammensetzung ein Epoxyharz oder ein in der Wärme härtbares Harz oder ein in der Wärme vernetzbares Harz ist.

15. (Speicher)behälter nach Anspruch 12, dadurch gekennzeichnet, daß die Mittel für die Zugbeständigkeit in Längsrichtung Fasern sind, die in polarer oder spiralförmiger Weise mit langer Steigung gewickelt und/oder ein Litzenband sind, die auf die Außenstruktur des Speicherbehälters aufgebracht sind.

## Claims

1. A process for manufacturing a metal tank, characterised in that:
a) a substantially cylindrical corrugated tube of a length suited to the final structure, such as a thermoplastic tube, is made,
b) the tube is circumferentially reinforced by filling the substantially cylindrical external hollow sections of the tube up to at least a certain level of their height H with a circumferential reinforcing element,
c) a cylindrical-hemispherical or cylindrical-ellipsoidal metal tank provided with a cylindrical zone corresponding in length and diameter to the length of the reinforced corrugated tube is placed inside the tube reinforced as described above,
d) a longitudinal reinforcement is deposited on the exterior of the unit made up of the reinforced tube and the metal tank except over the openings,
e) the material of the tank is softened by plastic deformation under the effect of internal pressure so that it conforms to a shape that allows it to withstand pressure by moving against the circumferential reinforcement of the corrugated tube and the longitudinal reinforcement deposited during phase d).

2. A process in accordance with claim 1, characterised in that the metal used has a high plasticity limit.

3. A process in accordance with claim 1, characterised in that a circumferential reinforcing element is used, such as a stabilisable resin reinforced with fibres, and that it is subjected to a process that will cure the stabilisable composition.

4. A process in accordance with claim 1, characterised in that a photocurable resin is used, which is cured by exposing the assembly to the action of a lamp generating ultraviolet radiation.

5. A process in accordance with claim 1, characterised in that a heat convertible resin is used and the assembly is maintained at the curing stage under conditions that permit the cross-linking to take place.

6. A process in accordance with claim 1, characterised in that a thermosetting resin is used and is stabilised by heating the assembly to a temperature that permits hardening of the resin.

7. A process in accordance with one of the previous claims, characterised in that the longitudinal reinforcement is made from an amide braiding impregnated with thermoplastic elastomer, the ends of the braiding being fixed by bonding points at the poles of the tank.

8. A process in accordance with claim 3, characterised in that the flexible tube coated with the hardening composition reinforced with fibres is covered with a casing of material that is essentially impermeable to the resin so that the resin may essentially be retained in place in the external hollow sections of the corrugated tube before longitudinal reinforcement takes place.

9. A process in accordance with claim 8, characterised in that the curing process takes place at the same time as the winding process.

10. A process in accordance with one of the previous claims, characterised in that at least one end of the tank is fitted with a system to provide communication with the exterior or sealed closure.

11. A process in accordance with one of the previous claims, whereby the tank is placed in a protective casing.

12. A tank manufactured in accordance with the process described in claim 1, made up of an internal metal casing made from two bases (38, 49) separated by a corrugated cylindrical zone (40) and assembled with the cylindrical body, the bases being fitted with at least one opening and means for closing off or communicating with the exterior (35, 36) such as a stopper or a valve located on the bases and means for providing resistance to longitudinal traction (34), characterised in that the internal metal casing of the cylindrical zone is corrugated, the corrugations of the cylindrical zone being circumferential or helical in shape with a low pitch, the external hollows (2a, 2b) of the corrugations of the internal casing being filled with a composite material comprising reinforcing fibres and in that the means for providing resistance to longitudinal traction (34) are placed over the whole of the external structure of the tank with the exception of the openings.

13. A tank in accordance with claim 12, used for the storage of pressurised fluids.

14. A tank in accordance with claim 12, characterised in that the composition is an epoxy resin or a thermosetting resin or a heat convertible resin.

15. A tank in accordance with claim 12, characterised in that the means for providing resistance to longitudinal traction are fibres wound in a polar or helical manner with a low pitch and/or a braiding placed on the external structure of the tank.
